(19) Europäisches Patentamt
European Patent Office
Office européen des brevets

(11) EP 2 978 818 B1

(12) **EUROPÄISCHE PATENTSCHRIFT**

(45) Veröffentlichungstag und Bekanntmachung des Hinweises auf die Patenterteilung:
**10.05.2017 Patentblatt 2017/19**

(21) Anmeldenummer: **14711217.1**

(22) Anmeldetag: **17.03.2014**

(51) Int Cl.:
***C08F 2/20*** *(2006.01)* ***B05D 3/00*** *(2006.01)*
***C08F 2/24*** *(2006.01)* ***C09D 133/14*** *(2006.01)*
***C09J 7/02*** *(2006.01)* ***C09J 133/14*** *(2006.01)*
***C09J 133/10*** *(2006.01)* ***B65D 75/58*** *(2006.01)*

(86) Internationale Anmeldenummer:
**PCT/EP2014/055225**

(87) Internationale Veröffentlichungsnummer:
**WO 2014/154507 (02.10.2014 Gazette 2014/40)**

(54) **VERWENDUNG EINER POLYMERDISPERSION ZUM KALTSIEGELN**

USE OF A POLYMER DISPERSION FOR COLD SEALING

UTILISATION D'UNE DISPERSION POLYMÈRE POUR SCELLER À FROID

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.03.2013 EP 13161125**

(43) Veröffentlichungstag der Anmeldung:
**03.02.2016 Patentblatt 2016/05**

(73) Patentinhaber: **BASF SE**
**67056 Ludwigshafen am Rhein (DE)**

(72) Erfinder:
- **KUNTZ, Andrea**
  **69123 Heidelberg (DE)**
- **SCHUMACHER, Karl-Heinz**
  **67433 Neustadt (DE)**
- **KIENER, Christoph**
  **67256 Weisenheim am Sand (DE)**

(74) Vertreter: **BASF IP Association**
**BASF SE**
**G-FLP-C006**
**67056 Ludwigshafen (DE)**

(56) Entgegenhaltungen:
**WO-A2-2011/073221**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft die Verwendung einer Polymerdispersion zum Kaltsiegeln, wobei die Polymerdispersion ein in Wasser dispergiertes Polymer mit einer Glasübergangstemperatur im Bereich von -20 bis +10 °C enthält, welches herstellbar ist durch Emulsionspolymerisation von Monomeren in Gegenwart mindestens eines polymeren Schutzkolloids und wobei das Polymer zu 0,05 bis kleiner 1 Gew.% gebildet ist aus einem Monomeren M, ausgewählt aus der Gruppe bestehend aus (Meth)acrylatmonomeren mit einem Substituenten der Formel

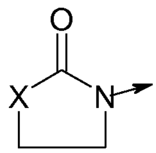

wobei X für $CH_2$, O, NH oder NR steht und R für eine C1 bis C4-Alkylgruppe steht. Die Erfindung betrifft auch ein Verfahren zur Herstellung kaltgesiegelter Verpackungen und die durch dieses Verfahren erhältlichen Verpackungen.

Kaltsiegelbare Zusammensetzungen sind Haftmittel, die sich nach Aufbringen und Trocknen auf einem Substrat nicht klebrig anfühlen, die aber aneinander haften, wenn sie bei Raumtemperatur mit Druck aneinander gepresst werden. Sie unterscheiden sich von Haftklebstoffen durch ihre bei Raumtemperatur fehlende oder allenfalls sehr geringe Klebrigkeit. Sie unterscheiden sich von heißsiegelbaren Zusammensetzungen dadurch, dass sie ohne Wärmeaktivierung miteinander unter Druck verklebbar sind. Kaltsiegelbare Zusammensetzungen sind bekannt, beispielsweise zum Verschließen von beutelförmigen Verpackungen, insbesondere für Lebensmittel oder andere wärmeempfindliche Güter, bei deren Verpackung die Anwendung von Wärme unerwünscht ist wie z.B. Eiscreme oder Schokolade oder wenn schnelle Verpackungsgeschwindigkeiten und hohe Taktzahlen gefordert werden. Wegen ihrer nicht-klebrigen Eigenschaften können damit beschichtete Substrate auf Rollen gerollt und bis zur Anwendung gelagert werden, ohne Haftung an der gegenüberliegenden, vorzugsweise mit einer Releasebeschichtung versehenen anderen Seite des Trägersubstrats. Typischerweise werden für Kaltsiegelklebstoffe Polymerdispersionen basierend auf Naturkautschuklatex verwendet. Nachteilig ist hierbei eine vergleichweise hohe Preisvolatilität, natürliche Qualitätsschwankungen des natürlichen Rohstoffs und vor allem das allergene Potential, welches diese Naturprodukte bergen.

In der WO 2011/073221 A2 werden kaltgesiegelte, wiederverschließbare Verpackungen beschrieben. Dabei wird ein Emulsionspolymerisat eingesetzt, welches in Gegenwart eines Schutzkolloids hergestellt wurde.

Üblicherweise werden Siegeldispersionen angewendet, indem sie auf eine Folie aufgebracht und getrocknet werden. Danach wird die mit Klebstoff beschichtete Folie aufgerollt und z.T. monatelang gelagert. Während dieser Lagerung wirken hohe Drücke. Man hat festgestellt, dass der einwirkende Druck bei der Lagerung den Klebstoff verändert, wobei die Siegelnahtfestigkeit von beschichteten Folien nach Drucklagerung deutlich kleiner ist als vor der Drucklagerung.

Aufgabe war es, weitere Zusammensetzungen für das Kaltsiegeln zur Verfügung zustellen, wobei die Zusammensetzungen möglichst frei sind von allergenem Potential und organischen Lösungsmitteln, d.h. wässrige Dispersionen von Polymeren sind, möglichst wenig oder keine Emulgatoren enthalten und die nach dem Trocknen eine kaltsiegelbare Beschichtung bilden. Aufgabe war es insbesondere, dass die Zusammensetzungen nach dem Kaltsiegeln möglichst hohe Siegelnahtfestigkeiten aufweisen, vor allem auch nach Drucklagerung von beschichteten Folien. Außerdem sollten die Zusammensetzungen möglichst gut durch übliche Auftragetechniken (wie z.B. Bedrucken) auftragbar sein, insbesondere auf Foliensubstraten.

Die Aufgabe wird erfindungsgemäß gelöst durch die Verwendung einer Polymerdispersion zum Kaltsiegeln, wobei die Polymerdispersion mindestens ein in Wasser dispergiertes Polymer enthält, welches herstellbar ist durch Emulsionspolymerisation von radikalisch polymerisierbaren Monomeren in Gegenwart mindestens eines polymeren Schutzkolloids (im Folgenden auch Emulsionspolymerisat genannt)
und wobei das Polymer eine berechnete Glasübergangstemperatur im Bereich von
-20 bis +10 °C aufweist und wobei das Polymer zu 0,05 bis kleiner 1 Gew.%, vorzugsweise zu 0,07 bis 0,8 Gew.% gebildet ist aus mindestens einem Monomeren M ausgewählt aus der Gruppe bestehend aus (Meth)acrylatmonomeren mit einem Substituenten der Formel

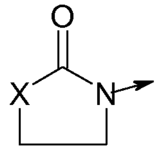

wobei X für $CH_2$, O, NH oder NR steht und R für eine C1 bis C4-Alkylgruppe steht.

Das Kaltsiegeln kann erfolgen durch Beschichtung eines geeigneten Substrats, z.B. eines Verpackungssubstrats mit einer das Emulsionspolymerisat enthaltenden Zusammensetzung in Form einer wässrigen Polymerdispersion, gefolgt von Trocknen und anschließendem Siegeln bei Temperaturen von beispielsweise nicht mehr als 40°C oder nicht mehr als 30°C.

Die Polymerdispersion kann als Kaltsiegelklebstoff eingesetzt werden. Vorzugsweise wird dabei neben unfunktionalisierten Alkyl(meth)acrylat-Monomeren wie z.B. Ethylacrylat, ein funktionelles Monomer mit Ureido-Gruppe, z.B. Ureidoethylmethacrylat (auch UMA oder Ureidomethacrylat genannt) eingesetzt, vorzugsweise in Kombination mit Vinylestermonomeren, z.B. Vinylacetat. Hierdurch lässt sich eine signifikante Erhöhung der Siegelnahtfestigkeit erzielen.

Während übliche schutzkolloidstabilisierte Polymerdispersionen, die als Rohstoffe für Kaltsiegelklebstoffe eingesetzt werden, Siegelnahtfestigkeiten von 4 -5 N/15 mm aufweisen, kann durch den Einsatz von nur 1 pphm (parts per hundred monomers; Gewichtsteile pro 100 Gewichtsteile Monomere) UMA (vorzugsweise 25%ig in Methylmethacrylat) die Siegelnahtfestigkeit auf z.B. bis zu 7 N/15 mm angehoben werden.

Kaltsiegelbar bedeutet, dass wenn zwei mit einer erfindungsgemäßen Zusammensetzung beschichtete und getrocknete Oberflächen bei Temperaturen kleiner 40°C, insbesondere kleiner 30 °C bzw. kleiner 25 °C, insbesondere bei Raumtemperatur (20°C) unter Ausübung von Druck in Kontakt gebracht werden, aneinander haften. Vorzugsweise beträgt die Haftung (Autoadhäsionshaftung) nach Siegelung mit 1,4 bar bei 20°C mindestens 2 N/15 mm (anfängliche Öffnungskraft), gemessen nach der in den Beispielen beschriebenen Methode zur Bestimmung der Siegelnahtfestigkeit. Bei der praktischen Anwendung erfolgt die Kaltsiegelung zweckmäßigerweise bei Umgebungstemperatur, also im Allgemeinen bei Temperaturen von 10 bis 30 °C, insbesondere 15 bis 25 °C und bei Drucken von wenigen Millibar bis zu mehreren Bar über Normaldruck (1 bar), z.B. bei 0,01 bis 5 bar, insbesondere von 0,1 bis 3 bar über Normaldruck. Die Siegelzeit, d.h. die Zeit während der der Druck aufrecht erhalten wird, beträgt z.B. 0,1 bis 20 Sekunden, insbesondere 0,1 bis 3 Sekunden, üblich sind insbesondere 0,5 Sekunden.

Die erfindungsgemäßen Polymerdispersionen bilden nach Aufbringen auf ein Substrat und nach Trocknen eine Beschichtung, die vorzugsweise autoadhäsiv und gegenüber Polyamidtrennbeschichtungen blockfest ist. Autoadhäsiv bedeutet, dass zwei beschichtete Oberflächen gegeneinander kaltsiegelbar sind. Vorzugsweise beträgt die Autoadhäsionshaftung der Klebstoffschicht nach Kaltsiegelung mit 1,4 bar bei 20°C mindestens 2 N/15 mm. Blockfest bedeutet, dass die Haftung einer mit einer erfindungsgemäßen Zusammensetzung beschichteten und getrockneten Oberfläche, d.h. die Haftung einer nichtgesiegelten Klebstoffschicht gegenüber einer Polyamidtrennbeschichtung nach Belastung einer kreisförmigen Oberfläche mit Durchmesser von 10 cm mit 10 Tonnen für einen Tag bei 20°C höchstens 0,1 N/25 mm beträgt, gemessen nach der in den Beispielen beschriebenen Methode.

Bevorzugte Verpackungen, beschichtete Folien bzw. Zusammensetzungen haben bzw. bewirken eine Erstöffnungskraft (Siegelnahtfestigkeit) von mindestens 2 N/15mm und eine Blockfestigkeit der Kaltsiegelbeschichtung gegen eine Polyamidtrennbeschichtung von vorzugsweise maximal 0,1 N/25 mm, jeweils gemessen nach den in den Beispielen beschriebenen Methoden.

Bei den erfindungsgemäßen Polymerdispersionen handelt es sich um Dispersionen von Polymeren in wässrigem Medium. Bei dem wässrigen Medium kann es sich z.B. um vollständig entsalztes Wasser handeln oder auch um Mischungen aus Wasser und einem damit mischbaren Lösemittel wie Methanol, Ethanol oder Tetrahydrofuran. Vorzugsweise werden keine organischen Lösungsmittel eingesetzt. Die Feststoffgehalte der Dispersionen betragen vorzugsweise von 15 bis 75 Gew.-%, bevorzugt von 40 bis 60 Gew.-%, insbesondere größer 50 Gew.%. Der Feststoffgehalt kann z.B. durch entsprechende Einstellung der bei der Emulsionspolymerisation eingesetzten Wassermenge und/oder der Monomermengen erfolgen. Die mittlere Teilchengröße der in der wässrigen Dispersion dispergierten Polymerteilchen ist vorzugsweise kleiner 400 nm, insbesondere kleiner 300 nm. Besonders bevorzugt liegt die mittlere Teilchengröße zwischen 140 und 280 nm. Unter mittlerer Teilchengröße wird hier der $d_{50}$-Wert der Teilchengrößenverteilung verstanden, d.h. 50 Gew.-% der Gesamtmasse aller Teilchen haben einen kleineren Teilchendurchmesser als der $d_{50}$-Wert. Die Teilchengrößenverteilung kann in bekannter Weise mit der analytischen Ultrazentrifuge (W. Mächtle, Makromolekulare Chemie 185 (1984), Seite 1025 - 1039) bestimmt werden. Der pH-Wert der Polymerdispersion wird vorzugsweise auf pH größer 4 insbesondere auf einen pH-Wert zwischen 5 und 9 eingestellt.

Die Zusammensetzung kann für die erfindungsgemäße Verwendung allein aus dem in Wasser dispergierten Polymer und dem Schutzkolloid bestehen. Sie kann aber auch noch weitere Zusatzstoffe enthalten, z.B. Füllstoffe, Antiblockmittel, Farbstoffe, Verlaufsmittel, oder Verdicker.

Vorzugsweise sind die erfindungsgemäßen Polymerdispersionen emulgatorarm, d.h. sie enthalten Emulgatoren (der Polymerisationsmischung zugesetzte, nicht-polymere, amphiphile, oberflächenaktive Substanzen) in einer Menge von vorzugsweise weniger als 3 oder weniger als 1 Gew.%. Besonders bevorzugt sind emulgatorfreie Systeme. In einer Ausführungsform der Erfindung erfolgt daher die in Gegenwart des Schutzkolloids durchgeführte Emulsionspolymerisation emulgatorfrei, d.h. ohne Zusatz von Emulgatoren.

Im Folgenden wird die Bezeichnung "(Meth)acryl..." und ähnliche Bezeichnungen als abkürzende Schreibweise verwendet für "Acryl... oder Methacryl...".

Schutzkolloide sind polymere Verbindungen, die bei Solvatation große Mengen Wasser binden und in der Lage sind, Dispersionen von wasserunlöslichen Polymeren zu stabilisieren. Im Gegensatz zu Emulgatoren erniedrigen sie in der Regel die Grenzflächenspannung zwischen Polymerpartikeln und Wasser nicht. Das zahlenmittlere Molekulargewicht der Schutzkolloide liegt vorzugsweise oberhalb von 1000 g/mol, insbesondere oberhalb von 2000 g/mol und bevorzugt bis zu 50000 g/mol oder bis zu 10000 g/mol. beispielsweise von 1000 bis 100000 g/mol, von 1000 bis 10000 g/mol oder von 2000 bis 10000 g/mol.

Die Schutzkolloide sind vorzugsweise wasserlöslich, d.h. sie sind in Wasser zu mindestens 10 g/l bei 23 °C und bei pH > 5,5 löslich.

Die Schutzkolloide werden vorzugsweise in einer Menge von 0,5 bis 60 Gew.-Teilen oder von 1 bis 30 Gew.-Teilen, besonders bevorzugt von 7 bis 30 Gew.-Teilen (insbesondere wenn der Gesamtfeststoffgehalt der erfindungsgemäßen Zusammensetzung mehr als 50 Gew.% beträgt), bezogen auf 100 Gew.-Teile der zu polymerisierenden Monomeren verwendet. Eine ausführliche Beschreibung von Schutzkolloiden findet man in Houben-Weyl, Methoden der organischen Chemie, Band XIV/1, Makromolekulare Stoffe, Georg-Thieme-Verlag, Stuttgart, 1961, Seiten 411 bis 420. Als Schutzkolloide in Betracht kommen z. B. amphiphile Polymere, also Polymere mit hydrophoben und hydrophilen Gruppen. Es kann sich um natürliche Polymere, wie Stärke oder um synthetische Polymere handeln.

Das Schutzkolloid wird vorzugsweise gebildet aus mindestens 40 Gew.-%, unten näher definierten, nichtionischen Hauptmonomeren sowie aus einer zweiten Monomerart, ausgewählt aus ethylenisch ungesättigten Säuremonomeren. Das Schutzkolloid kann darüber hinaus optional aus weiteren, vorzugsweise nichtionischen Monomeren gebildet sein. Das Schutzkolloid ist vorzugsweise zu mindestens 40 Gew.-%, insbesondere von 40 bis 80 Gew.% oder von 50 bis 80 Gew.% aus Hauptmonomeren aufgebaut, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren.

Hauptmonomere für das Schutzkolloid sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt. Als Hauptmonomere für das Schutzkolloid bevorzugt sind die $C_1$- bis $C_{10}$-Alkylacrylate und -methacrylate, insbesondere $C_1$- bis $C_8$-Alkylacrylate und -methacrylate und Vinylaromaten, insbesondere Styrol und alpha-Methylstyrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat, 2-Ethylhexylacrylat, 2-Propylheptylacrylat, Styrol, alpha-Methylstyrol sowie Mischungen dieser Monomere.

Das Schutzkolloid ist weiterhin vorzugsweise zu mindestens 15 Gew.%, insbesondere von 15 bis 60 Gew.% oder von 20 bis 50 Gew.% aus ethylenisch ungesättigten Säuremonomeren aufgebaut. Ethylenisch ungesättigte Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure. Die Säuremonomere können in Form der freien Säuren sowie in partiell oder vollständig mit geeigneten Basen neutralisierter Form bei der Polymerisation eingesetzt werden. Vorzugsweise verwendet man Natronlauge, Kalilauge oder Ammoniak als Neutralisationsmittel.

Vorzugsweise ist das Schutzkolloid zu 50 bis 80 Gew.% aufgebaut aus C2- bis C10-Alkyl-(meth)acrylaten und zu 20 bis 50 Gew.% aus (Meth)acrylsäure und vorzugsweise aus keinen weiteren Monomeren.

In einer bevorzugten Ausführungsform handelt es sich um ein Schutzkolloid, welches

(i) in einer Menge von 7 bis 30 Gew.-Teilen, bezogen auf 100 Gew.-Teile der zu polymerisierenden Monomeren, eingesetzt wird,

(ii) zu mindestens 40 Gew.-% aus Hauptmonomeren aufgebaut ist, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10

C-Atome enthaltenden Alkoholen, aliphatischen Kohlenwasserstoffen mit 2 bis 8 C-Atomen und ein oder zwei Doppelbindungen und Mischungen dieser Monomeren,
(iii) zu mindestens 15 Gew.% aus ethylenisch ungesättigten Säuremonomeren aufgebaut ist, welche vorzugsweise ausgewählt sind aus Acrylsäure, Methacrylsäure und deren Gemisch und
(iv) ein zahlenmittleres Molekulargewicht von 1000 bis 10000 aufweist.

Der als Bindemittel fungierende Wirkstoff für die Kaltsiegelung der Klebstoffschicht ist das durch Emulsionspolymerisation von radikalisch polymerisierbaren Monomeren herstellbare Emulsionspolymerisat, im Folgenden auch Klebstoffpolymer genannt. Das Klebstoffpolymer besteht vorzugsweise zu mindestens 60 Gew.-%, bevorzugt zu mindestens 80 Gew.-%, z.B. von 80 bis 99,5 Gew.%, besonders bevorzugt zu mindestens 90 Gew.-% aus einem oder mehreren der nachfolgend beschriebenen Hauptmonomeren. Die Hauptmonomeren sind ausgewählt aus der Gruppe bestehend aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind z. B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z. B. Vinyllaurat, -stearat, Vinylpropionat, Versaticsäurevinylester und Vinylacetat. Als vinylaromatische Verbindungen kommen Vinyltoluol, a- und p-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 4 bis 8 C-Atomen und zwei olefinischen Doppelbindungen seien Butadien, Isopren und Chloropren genannt.

Als Hauptmonomere für das Klebstoffpolymer bevorzugt sind die $C_1$- bis $C_{10}$-Alkylacrylate und - methacrylate, insbesondere $C_1$- bis $C_8$-Alkylacrylate und -methacrylate und Vinylaromaten, insbesondere Styrol und deren Mischungen. Ganz besonders bevorzugt sind Methylacrylat, Methylmethacrylat, Ethylacrylat, n-Butylacrylat, n-Butylmethacrylat, n-Hexylacrylat, Octylacrylat und 2-Ethylhexylacrylat, 2-Propylheptylacrylat, Styrol sowie Mischungen dieser Monomere.

Neben den Hauptmonomeren kann das Klebstoffpolymer weitere Monomere enthalten, z.B. Monomere mit Carbonsäure, Sulfonsäure oder Phosphonsäuregruppen. Bevorzugt sind Carbonsäuregruppen. Genannt seien z. B. Acrylsäure, Methacrylsäure, Itaconsäure, Maleinsäure oder Fumarsäure. Weitere Monomere sind z. B. auch Hydroxylgruppen enthaltende Monomere, insbesondere $C_1$-$C_{10}$-Hydroxyalkyl(meth)acrylate sowie (Meth)acrylamid. Als weitere Monomere seien darüber hinaus Phenyloxyethylglykolmono-(meth-)acrylat, Glycidylacrylat, Glycidylmethacrylat, Amino-(meth-)acrylate wie 2-Aminoethyl-(meth)acrylat genannt. Als weitere Monomere seien auch vernetzende Monomere genannt.

Vorzugsweise ist das Klebstoffpolymer bzw. das durch Emulsionspolymerisation hergestellte Emulsionspolymerisat aber frei von Säuregruppen.

Insbesondere ist das Klebstoffpolymer zu mindestens 60 Gew.-%, besonders bevorzugt zu mindestens 80 Gew.-%, z.B. von 60 bis 99,9 Gew.%, und ganz besonders bevorzugt zu mindestens 95 Gew.-% aus mindestens einem $C_1$ bis $C_{20}$ Alkyl(meth)acrylat, deren Gemisch oder deren Gemisch mit Styrol und/oder Vinylacetat aufgebaut.

Das Polymer kann z.B. aufgebaut sein aus

(a) 90 bis 99 Gew.% mindestens eines ersten Monomers, ausgewählt aus n-Butylacrylat und Ethylacrylat,
(b) 0,1 bis 9,9 Gew.% mindestens eines zweiten Monomers, ausgewählt aus Methylacrylat, Methylmethacrylat, Vinylacetat und Styrol,
(c) 0,05 bis 0,95 Gew.% Ureido(meth)acrylat.

In einer Ausführungsform handelt es sich bei dem Bindemittel um ein Copolymer aus Ethylacrylat, Methylmethacrylat, Vinylacetat und Ureidoethylmethacrylat.

Das Polymer wird zu 0,05 bis kleiner 1 Gew.%, vorzugsweise zu 0,07 bis 0,8 Gew.%, bezogen auf die Gesamtmenge der zur Herstellung des Polymers eingesetzten Monomere, gebildet aus mindestens einem Monomeren M ausgewählt aus der Gruppe bestehend aus (Meth)acrylatmonomeren mit einem Substituenten der Formel

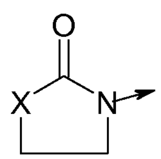

wobei X für $CH_2$, O, NH oder NR steht und R für eine C1 bis C4-Alkylgruppe steht. Der Pfeil am N-Atom bedeutet die Verknüpfungsstelle des Substituenten an das (Meth)acrylatmonomer. Im Falle von X gleich NH oder NR handelt es sich um ein Monomer M mit einer Ureidogruppe. Im Falle von X gleich O oder $CH_2$ werden die Monomere M als Monomere mit einer ureidoanalogen Gruppe bezeichnet.

Monomere M sind z.B. solche der Formel

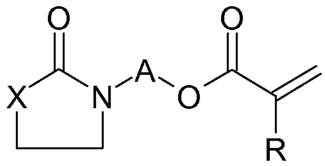

wobei X die oben angegebenen Bedeutung hat, R für Wasserstoff oder Methyl steht und A für eine divalente Verbindungsgruppe steht, vorzugsweise für eine C1 bis C10-Alkylgruppe oder für eine C2 bis C4-Alkylgruppe. Besonders bevorzugt sind Ureidoalkyl(meth)acrylate mit 1 bis 10 C-Atomen, vorzugsweise 2 bis 4 C-Atomen in der Alkylgruppe, insbesondere Ureidoethylmethacrylat (auch als Ureidomethacrylat oder als UMA bezeichnet).

Vorzugsweise wird das Polymer zu 100% aus Monomeren gebildet, welche ausgewählt sind aus Acrylsäureestern, Methacrylsäureestern, Vinylestern, Styrol, Ureido(meth)acrylat und deren Gemisch, und das Schutzkolloid wird vorzugsweise

(i) in einer Menge von 7 bis 30 Gew.-%, bezogen auf die Menge des Polymers, eingesetzt,
(ii) und ist aufgebaut zu mindestens 40 Gew.-% aus Hauptmonomeren, welche ausgewählt sind aus der Gruppe bestehend aus C1- bis C20-Alkyl(meth)acrylaten, Styrol, alpha-Methylstyrol und deren Gemisch, und
(iii) zu mindestens 15 Gew.% aus ethylenisch ungesättigten Säuremonomeren, welche vorzugsweise ausgewählt sind aus Acrylsäure, Methacrylsäure und deren Gemisch und
(iv) weist ein zahlenmittleres Molekulargewicht von 1000 bis 10000 auf.

Das in Gegenwart mindestens eines Schutzkolloids hergestellte Emulsionspolymerisat hat eine berechnete Glasübergangstemperatur von -20 bis +10°C, vorzugsweise von -15 bis +5 °C. Die Berechnung der Glasübergangstemperatur ist mittels der Fox-Gleichung möglich. Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für eine Berechnung der Glasübergangstemperatur von Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$,.... $T_g^n$ die Glasübergangstemperaturen der jeweils nur aus einem der Monomeren 1, 2, .... n aufgebauten Polymerisate in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J. Wiley, New York 1975, und 3rd Ed. J. Wiley, New York 1989.

Die Herstellung der Polymere kann durch Emulsionspolymerisation erfolgen, es handelt sich dann um ein Emulsionspolymerisat. Bei der Emulsionspolymerisation werden in der Regel ionische und/oder nicht-ionische Emulgatoren und/oder Schutzkolloide bzw. Stabilisatoren als grenzflächenaktive Verbindungen verwendet, um die Dispergierung der Monomeren in dem wässrigen Medium zu unterstützen. Erfindungsgemäß können ein oder mehrere der oben genannten Schutzkolloide als einziges Dispergiermittel eingesetzt werden, d.h. ohne einen Zusatz von Emulgatoren. Falls gewünscht, können aber auch geringe Mengen an Emulgatoren mitverwendet werden. Die Schutzkolloide werden vorgelegt oder gleichzeitig mit Monomeren dem Polymerisationsgefäß zugeführt. Sie werden vorzugsweise bei der Emulsionspolymerisation vorgelegt, während gegebenenfalls zusätzlich eingesetzte Emulgatoren zusammen mit den Monomeren auch im Laufe der Polymerisation zugeführt werden können. Vorzugsweise erfolgt die Emulsionspolymerisation in Gegenwart mindestens eines Schutzkolloids ohne Zusatz eines nicht-polymeren Emulgators.

Falls Emulgatoren als zusätzliche grenzflächenaktive Substanzen eingesetzt werden, so handelt es sich vorzugsweise um anionische oder nichtionische Emulgatoren. Geeignete Emulgatoren sind beispielsweise ethoxylierte $C_8$- bis $C_{36}$- oder $C_{12}$- bis $C_{18}$-Fettalkohole mit einem Ethoxylierungsgrad von 3 bis 50 oder von 4 bis 30, ethoxylierte Mono-, Di- und Tri- $C_4$- bis $C_{12}$-oder $C_4$- bis $C_9$-Alkylphenole mit einem Ethoxylierungsgrad von 3 bis 50, Alkalimetallsalze von

Dialkylestern der Sulfobernsteinsäure, Alkalimetall- und Ammoniumsalze von $C_8$- bis $C_{12}$-Alkylsulfaten, Alkalimetall- und Ammoniumsalze von $C_{12}$- bis $C_{18}$-Alkylsulfonsäuren und Alkalimetall- und Ammoniumsalze von $C_9$- bis $C_{18}$-Alkylarylsulfonsäuren. Kationaktive Emulgatoren sind z.B. Verbindungen mit mindestens einer Amino- oder Ammoniumgruppe und mindestens einer C8-C22-Alkylgruppe. Weitere geeignete Emulgatoren sind Verbindungen der allgemeinen Formel

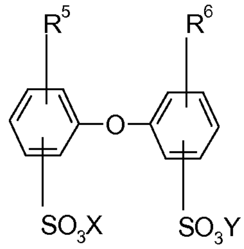

worin $R^5$ und $R^6$ Wasserstoff oder $C_4$- bis $C_{14}$-Alkyl bedeuten und nicht gleichzeitig Wasserstoff sind, und X und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen, in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax®2A1 (Warenzeichen der Dow Chemical Company). Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208. Handelsnamen von Emulgatoren sind z. B. Dowfax®2 A1, Emulan® NP 50, Dextrol®OC 50, Emulgator 825, Emulgator 825 S, Emulan®OG, Texapon® NSO, Nekanil® 904 S, Lumiten® I-RA, Lumiten® E 3065, Disponil® FES 77, Lutensol® AT 18, Steinapol® VSL, Emulphor® NPS 25. Geeignet sind auch copolymerisierbare Emulgatoren, welche eine radikalisch polymerisierbare, ethylenisch ungesättigte Doppelbindung enthalten, z.B. reaktive anionische Emulgatoren wie Adeka® Resoap SR-10.

Die Emulsionspolymerisation erfolgt in der Regel bei 30 bis 130 °C, vorzugsweise bei 50 bis 95 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich oder auch stufenweise zuführt.

Vorzugsweise erfolgt die Emulsionspolymerisation in einer Rampenfahrweise. Dabei erfolgt der Zulauf der Monomere und optional auch der Schutzkolloide mit sich ändernder Zulaufgeschwindigkeit, wobei die Anfangsgeschwindigkeit des Zulaufs geringer ist als die Endzulaufgeschwindigkeit.

Beispielsweise werden mindestens 80 Gew.%, vorzugsweise 80 bis 100 Gew.% der Gesamtmenge des Schutzkolloids während der Emulsionspolymerisation im Zulaufverfahren zugefahren und auch die Monomerzugabe erfolgt im Zulaufverfahren, wobei die Zulaufgeschwindigkeit mit der Zeit ansteigt, d.h. die Endgeschwindigkeit des Monomerzulaufs ist höher ist als die Anfangsgeschwindigkeit. Die Zulaufgeschwindigkeit steigt dabei vorzugsweise kontinuierlich oder inkrementell in mehreren Schritten, z.B. in mindestens drei oder mindestens fünf Schritten an. Denkbar steigt auch die Zulaufgeschwindigkeit für das Schutzkolloid kontinuierlich oder in mehreren Schritten z.B. in mindestens drei oder mindestens fünf Schritten inkrementell an. Es befindet sich also zu Beginn der Polymerisation nur sehr wenig oder vorzugsweise gar kein Schutzkolloid in der Vorlage. Vorzugsweise beginnt die Zugabe von Schutzkolloid erst, nachdem die Polymerisation gestartet wurde und mindestens 1 Gew.%, mindestens 2 Gew.% oder mindestens 5 Gew.% der Gesamtmonomermenge bereits dem Polymerisationsgefäß zugesetzt wurden. Die Zugabe von Schutzkolloid erfolgt dabei vorzugsweise kontinuierlich oder inkrementell und parallel zur kontinuierlichen oder inkrementellen Zugabe der restlichen Monomere.

Besonders bevorzugt befindet sich das Schutzkolloid vor Reaktionsbeginn vollständig in der Vorlage. Dabei kann die Neutralisation der Säuregruppen des Schutzkolloids mit einer geeigneten Base (z.B. Alkalihydroxid oder Ammoniak) verzögert erfolgen, z.B. 10 Minuten, 20 Minuten oder 30 Minuten nach dem Start der Polymerisationsreaktion bzw. nach Beginn des Monomerzulaufs.

Vorzugsweise erfolgt die Polymerisation derart, dass während der Emulsionspolymerisation maximal 10 Gew.% der zur Bildung des Polymers eingesetzten Monomere in der Anfangsgeschwindigkeit des Monomerzulaufs oder in einer Zulaufgeschwindigkeit, die kleiner ist als die Endgeschwindigkeit des Monomerzulaufs, zugesetzt werden.

Bei der Emulsionspolymerisation können die üblichen und bekannten Hilfsstoffe, wie z.B. wasserlösliche Initiatoren und Regler eingesetzt werden. Wasserlösliche Initiatoren für die Emulsionspolymerisation sind z.B. Ammonium- und Alkalimetallsalze der Peroxidischwefelsäure, z. B. Natriumperoxodisulfat, Wasserstoffperoxid oder organische Peroxide, z. B. tert-Butylhydroperoxid. Geeignet sind auch sogenannte Reduktions-Oxidations (Red-Ox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Initiatoren für die Emulsionspolymerisation. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Red-Ox-Initiator-Systeme sind z. B. Ascorbinsäure/Eisen(II)sulfat/Natrium-peroxidisulfat, tert-Butylhydroperoxid/Natriumdisulfit, tert-Butylhydroperoxid/Na-Hydroxymethansulfinsäure oder tert-Butylhydroperoxid/Ascorbinsäure. Die einzelnen Komponenten, z. B. die Reduktionskomponente, können auch Mischungen sein z. B. eine Mischung aus dem Natriumsalz der Hydroxymethansulfinsäure und Natriumdisulfit. Die genannten Verbindungen werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung. Die Menge der Initiatoren beträgt im Allgemeinen 0,1 bis 10 Gew.-%, bevorzugt 0,2 bis 5 Gew.-%, bezogen auf die zu polymerisierenden Monomeren. Es können auch mehrere, verschiedene Initiatoren bei der Emulsionspolymerisation Verwendung finden. Zur Entfernung der Restmonomeren wird üblicherweise auch nach dem Ende der eigentlichen Emulsionspolymerisation Initiator zugesetzt.

Bei der Polymerisation können Regler eingesetzt werden, z. B. in Mengen von 0 bis 1 Gew.-Teile, oder von 0,05 bis 0,5 Gew.-Teile bezogen auf 100 Gew.-Teile der zu polymerisierenden Monomeren, wodurch die Molmasse verringert wird. Geeignet sind z.B. Verbindungen mit einer Thiolgruppe wie tert.-Butylmercaptan, Thioglycolsäureethylalkylester, Mercaptoethanol, Mercaptopropyltrimethoxysilan oder tert.-Dodecylmercaptan. Weiterhin können Regler ohne Thiolgruppe verwendet werden, wie z.B. Terpinolen. In einer bevorzugten Ausführungsform ist das Emulsionspolymerisat hergestellt unter Verwendung von 0,05 bis 0,5 Gew.-Teilen, bezogen auf die Monomermenge, an mindestens einem Molekulargewichtsregler.

Gegenstand der Erfindung ist auch ein Verfahren zur Herstellung einer kaltgesiegelten Verpackung, wobei eine Zusammensetzung in Form einer wässrigen Polymerdispersion zur Verfügung gestellt und auf ein Verpackungssubstrat aufgebracht, getrocknet und mit einem zweiten Substrat kaltgesiegelt wird und wobei die Polymerdispersion mindestens ein in Wasser dispergiertes Polymer enthält, welches herstellbar ist durch Emulsionspolymerisation von radikalisch polymerisierbaren Monomeren in Gegenwart mindestens eines polymeren Schutzkolloids und wobei das Polymer eine berechnete Glasübergangstemperatur im Bereich von -20 bis +10 °C aufweist und wobei das Polymer zu 0,05 bis 1 Gew.% gebildet ist aus mindestens einem Monomeren ausgewählt aus der Gruppe bestehend aus (Meth)acrylatmonomeren mit einem Substituenten der Formel

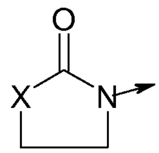

wobei X für $CH_2$, O, NH oder NR steht und R für eine C1 bis C4-Alkylgruppe steht.

Die erfindungsgemäße Polymerdispersion eignet sich zum Kaltsiegeln von zwei beliebigen Substraten, wobei,

- die beiden Substrate an den Stellen, die verklebt werden sollen, jeweils mit der erfindungsgemäßen Polymerdispersion beschichtet sind oder beschichtet werden und
- die beiden Substrate gegebenenfalls unter Ausübung von Druck in Kontakt gebracht werden und die Temperatur in der beschichteten Zusammensetzung kleiner 40°C ist (Kaltversiegelung, siehe oben).

Als zu verklebende Substrate kommen beliebige in Betracht, z. B. Substrate aus Holz, Metall, Papier oder Kunststoff, die in beliebiger Kombination miteinander verklebt werden können, wobei vorzugsweise mindestens ein Substrat eine Polymerfolie ist. Die Substrate werden dazu mit der erfindungsgemäßen Zusammensetzung beschichtet.

Vorzugsweise bildet die Polymerdispersion nach Aufbringen auf ein Substrat und nach Trocknen eine bei Raumtemperatur blockfeste, autoadhäsive Beschichtung.

Die Beschichtung kann in üblicher Weise wie z.B. durch Bedrucken, insbesondere durch Flexodruck oder durch Tiefdruck (Gravurdruck) erfolgen. Übliche Schichtdicken (nach Trocknung) sind z.B. 1 bis 30 $g/m^2$, vorzugsweise 1 bis 10 $g/m^2$ oder 2 bis 7 $g/m^2$. Vorzugsweise wird die Polymerdispersion in einer Menge von 2 bis 5 $g/m^2$, bezogen auf den Feststoffgehalt der Polymerdispersion, auf jedem zu siegelnden Materialabschnitt aufgebracht.

Insbesondere eignet sich die erfindungsgemäße Zusammensetzung zur Herstellung von Verpackungen. In Betracht kommen dabei Verpackungen aus beliebigen Materialien, z. B. aus Papier oder vorzugsweise aus Kunststoff. Genannt seien z. B. Verpackungen aus Polymerfolien, gegebenenfalls auch metallisierten Polymerfolien, z. B. aus Polyethylen, Polypropylen, PVC, Polyester, Polyacetat. Bevorzugte Verpackungssubstrate sind ausgewählt aus Polymerträgerfolien aus Polyethylen und orientiertem Polypropylen.

Zur Herstellung von Verpackungen ist insbesondere ein beidseitig beschichteter Träger geeignet, wobei der Träger auf der einen Seite (im nachfolgenden als Vorderseite bezeichnet) eine äußere Schicht der erfindungsgemäßen Zusammensetzung aufweist und auf der anderen Seite (im nachfolgenden als Rückseite bezeichnet) eine äußere Releasebeschichtung aufweist. Der Träger kann z. B. aus einer der oben genannten Polymerfolien, bzw. metallisierten Polymerfolien bestehen, genannt seien insbesondere Folien aus orientiertem Polypropylen, Polyethylen, vorzugsweise high density Polyethylen oder Polyethylenterephthalat. Die Polymerfolien können auch Corona vorbehandelt sein. Die erfindungsgemäße Zusammensetzung kann direkt auf die Vorderseite des Trägers beschichtet sein, zwischen dem Träger und der erfindungsgemäßen Zusammensetzung können sich jedoch auch noch andere Schichten befinden, z. B. Primerschichten, Barriereschichten oder farbige oder schwarz-weiße Druckfarbenschichten, wobei Druckfarbenschichten sich aber vorzugsweise auf der Rückseite des Trägers befinden. Wesentlich ist, dass sich die Schicht der erfindungsgemäßen Zusammensetzung außen befindet.

Die Releasebeschichtung kann aus einem beliebigen Material sein, es kann sich um eine Polymerfolie, z.B. eine Folie aus orientiertem Polypropylen, die aufkaschiert oder coextrudiert wird, oder um einen flüssigen Lack, z. B. ein Polyamidlack, der aufgetragen und verfilmt wird, handeln; wesentlich ist, dass die auf der Vorderseite des Trägers aufgebrachte Klebstoffschicht (im vorliegenden Fall die erfindungsgemäße Zusammensetzung) nicht auf der Releasebeschichtung haftet (Blockfestigkeit). Der Träger wird im Allgemeinen aufgerollt und später von der Rolle verarbeitet. Beim Aufrollen kommen die Vorderseite und die Rückseite des Trägers in direkten Kontakt. Ein Haften der Vorderseite auf der Rückseite würde den Träger unbrauchbar machen. Zwischen der Releasebeschichtung und dem Träger können sich weitere Schichten befinden; in Betracht kommen wiederum Schichten eines Primers, der die Haftung verbessert und Druckfarbenschichten. Die äußere Releasebeschichtung hat auch die Aufgabe, die unteren Schichten, insbesondere die Druckfarbenschicht gegen äußere Einwirkungen zu schützen.

Vorzugsweise besteht die Polymerträgerfolie aus Polyethylen oder orientiertem Polypropylen, ist auf einer Seite erfindungsgemäß mit der Zusammensetzung in Form einer wässrigen Polymerdispersion beschichtet und ist auf der anderen Seite mit einer Releasebeschichtung beschichtet, vorzugsweise auf Basis von Polyamid.

Bevorzugte Träger sind wie folgt aufgebaut, wobei die Reihenfolge der Schichten der räumlichen Anordnung entspricht:

Klebstoffschicht (erfindungsgemäß einzusetzende Polymerdispersion)
Träger
Gegebenenfalls Primerschicht
Gegebenenfalls Druckfarbenschicht
Releasebeschichtung.

Der beidseitig beschichtete Träger wird insbesondere zur Herstellung von Verpackungen verwendet, vorzugsweise wird er dazu mit sich selbst durch Kaltversiegelung verklebt, wobei jeweils die mit der äußeren, erfindungsgemäßen Zusammensetzung beschichteten Vorderseiten in Kontakt gebracht werden. Wesentlich ist dabei, dass beide zu verklebenden Träger an den zu verklebenden, die spätere Siegelnaht bildenden Stellen mit der erfindungsgemäßen Zusammensetzung beschichtet sind. Die Verpackung wird durch Kaltversiegelung der Klebstoffschicht miteinander verschlossen, sobald das zu verpackende Gut eingefüllt ist. Die Verpackungen eignen sich insbesondere für Lebensmittel.

Bei der Herstellung der Verpackung wird die für die Kaltversiegelung verwendete Zusammensetzung (Polymerdispesion) vorzugsweise in einer Menge von 2 bis 5 $g/m^2$ (bezogen auf Feststoff) auf jedem Verschlussabschnitt aufgebracht.

Die Verschlusskräfte der erfindungsgemäßen Verpackung sind vorzugsweise derart, dass die anfängliche Öffnungskraft mindestens 2 N/15 mm, vorzugsweise 2 bis 7 N/15 mm beträgt, gemessen nach der in den Beispielen beschriebenen Methode.

Gegenstand der Erfindung ist auch eine beschichtete Polymerfolie, wobei eine Polymerträgerfolie zumindest teilweise, d.h. zumindest an den die spätere Siegelnaht bildenden Bereichen mit einer erfindungsgemäßen Zusammensetzung beschichtet ist. Vorzugsweise weist die erfindungsgemäße Polymerfolie eine erste und eine zweite Seite auf, wobei die erste Seite als äußere Schicht zumindest teilweise mit einer erfindungsgemäßen Zusammensetzung beschichtet ist und die zweite Seite als äußere Schicht eine Releasebeschichtung aufweist. In einer Ausführungsform besteht die Polymerträgerfolie der erfindungsgemäßen beschichteten Polymerfolie aus Polyethylen oder orientiertem Polypropylen und die Releasebeschichtung wird auf Basis von Polyamid gebildet.

Gegenstand der Erfindung sind auch nach dem hierin beschriebenen, erfindungsgemäßen Verfahren hergestellte Verpackungen.

Gegenstand der Erfindung ist auch die Verwendung der erfindungsgemäß beschichteten Substrate, insbesondere von erfindungsgemäß beschichteten Polymerfolien zur Herstellung bzw. zum Kaltsiegeln von Verpackungen, insbesondere von Folienverpackungen für Lebensmittel.

## Beispiele

Sofern sich aus dem Zusammenhang nichts anderes ergibt, bedeuten die Angaben in Prozent immer Gewichtsprozent. Die Angabe eines Gehalts bezieht sich auf den Gehalt in wässriger Lösung oder Dispersion.

Es wurden die folgenden Einsatzstoffe verwendet:

| | |
|---|---|
| Oppalyte® 33MW247: | für Kaltsiegelanwendungen empfohlener Film aus oberflächenbehandeltem, biaxial orientierten Polypropylen der Firma Exxon Mobil Corp. |
| Treofan® SHD40: | für Kaltsiegelanwendungen empfohlener Film aus orientiertem Polypropylen der Firma Treofan GmbH & Co. KG |
| Gecko® Coldseal Release Lack 70 GL 282547: | Polyamid-Releaselack auf Lösemittelbasis der Firma Huber Group |

| | |
|---|---|
| nBA | n-Butylacrylat |
| AS | Acrylsäure |
| EA | Ethylacrylat |
| UMA | Ureidoethylmethacrylat |
| MMA | Methylmethacrylat |
| VAc | Vinylacetat |
| EHTG | 2-Ethylhexyl-thioglykolat |

### Kaltsiegelprüfung

### Beschichtung mit Polyamid Release-Lack

Mit einem 0,07mm Drahtrakel wird Gecko® Coldseal Release Lack 70 GL 282547 auf die vorbehandelte Seite der OPP-Folie SHD40 aufgetragen und 10 Sek. mit Heißluft getrocknet. Auftragsmenge Release-Lack ca. 1,0 g/m$^2$.

### Beschichtung der OPP-Folie

Mit dem Balkenrakel wird der Kleber (Polymerdispersion) auf die vorbehandelte Seite der OPP-Folie Oppalyte ® 33MW247 aufgetragen und 1 Min. bei 70°C getrocknet. Die beschichtete Folie wird mit einer mit Release-Lack beschichteten OPP-Folie abgedeckt.

### Siegelnahtfestigkeit (SNF)

Aus der beschichteten Folie werden 15 mm breite Streifen geschnitten und am Siegelgerät werden jeweils zwei Streifen gegeneinander (Klebstoff gegen Klebstoff) 0,5 Sek. mit 200 N (1,4 bar) gesiegelt. 30 Sekunden nach der Siegelung werden mit einer Abzugsgeschwindigkeit von 50 mm/min die Schälfestigkeiten in N/15mm bestimmt.

### Siegelnahtfestigkeit (SNF) nach Drucklagerung

Die beschichtete Folie wird gegen die mit Release-Lack beschichtete Seite einer OPP-Folie SHD40 gelegt und eine Fläche von 10 cm mal 10 cm wird einen Tag lang mit 10 Tonnen belastet. Danach werden aus der beschichteten Folie 15 mm breite Streifen geschnitten und am Siegelgerät werden jeweils zwei Streifen gegeneinander (Klebstoff gegen Klebstoff) 0,5 Sek. mit 200 N (1,4 bar) gesiegelt. 30 Sekunden nach der Siegelung werden mit einer Abzugsgeschwindigkeit von 50 mm/min die Schälfestigkeiten in N/15mm bestimmt.

Blocktest

Die beschichtete Folie wird gegen die mit Release-Lack beschichtete Seite einer OPP-Folie SHD40 gelegt und ein kreisförmiger Ausschnitt mit einem Durchmesser von 10 cm wird einen Tag lang mit 10 Tonnen belastet. Danach werden die Schälfestigkeiten von 25 mm breiten Streifen mit einer Abzugsgeschwindigkeit von 800 mm/min in N/25mm bestimmt.

Alle Prüfungen erfolgen bei Raumtemperatur (20°C).

Tabelle 1: Zusammensetzung der wässrigen Polymerdispersionen

| Beispiel | Schutzkolloid | Polymer | Feststoffgehalt [%] | Tg [°C] [1)] |
|---|---|---|---|---|
| E1 | 65 nBA / 35 AS | 95 EA, 0,25 UMA, 0,75 MMA, 4 VAc, 0,3 EHTG | 56,6 | -10 |
| E2 | 65 nBA / 35 AS | 95 EA, 0,25 UMA, 0,75 MMA, 4 VAc, 0,3 EHTG | 56,6 | -10 |
| E3 | 65 nBA / 35 AS | 94 EA, 0,25 UMA, 0,75 MMA, 5 VAc, 0,3 EHTG | 58 | -10 |
| E4 | 65 nBA / 35 AS | 95 EA, 0,25 UMA, 0,75 MMA, 4 VAc, 0,3 EHTG | 58,5 | -10 |
| E5 | 65 nBA / 35 AS | 99 EA, 0,125 UMA, 0,375 MMA, 0,5 VAc, 0,3 EHTG | 56,7 | -12 |
| E6 | 65 nBA / 35 AS | 99 EA, 0,25 UMA, 0,75 MMA, 0,3 EHTG | 56,8 | -12 |
| V1 | 65 nBA / 35 AS | 100 EA, 0,3 EHTG | 56,5 | -13 |
| V2 | 65 nBA / 35 AS | 95 EA, 1 MMA, 4 VAc, 0,3 EHTG | 58 | -10 |
| V3 | 65 nBA / 35 AS | 96 EA, 4 VAc, 0,3 EHTG | 54,9 | - 11 |
| V4 | 65 nBA / 35 AS | 94 EA, 6 VAc, 0,3 EHTG | 56,4 | -10 |
| V5 | 65 nBA / 35 AS | 94 EA, 1 MMA, 5 VAc, 0,3 EHTG | 55,6 | -10 |
| V6 | 65 nBA / 35 AS | 95 EA, 1 UMA, 3 MMA, 1 VAc, 0,3 EHTG | 56,7 | -9 |
| [1)] nach der Fox-gleichung berechnete Glasübergangstemperatur des Polymers | | | | |

Tabelle 2: Ergebnisse der Kaltsiegelprüfungen

| Beispiel | Siegelnahtfestigkeit [N/15 mm] | Siegelnahtfestigkeit, nach Drucklagerung [N/15 mm] |
|---|---|---|
| E1 | 6,5 | 5,7 |
| E2 | 6,7 | 5,8 |
| E3 | 6,6 | 4,9 |
| E4 | 7,0 | 6,3 |
| E5 | 6,6 | 4,6 |
| E6 | 6,4 | 2,8 |
| V1 | 4,3 | 2,4 |
| V2 | 4,4 | 3,2 |
| V3 | 4,5 | 3,4 |
| V4 | 4,9 | 4,0 |
| V5 | 4,5 | 4,1 |
| V6 | 1,8 | 2,0 |

Die erfindungsgemäßen Zusammensetzungen E1 bis E6 zeichnen sich gegenüber den Vergleichszusammensetzungen V1 bis V6 durch eine größere Siegelnahtfestigkeit von mehr als 5 N/15 mm aus.

Alle Beispiele und Vergleichsbeispiele weisen im Blocktest eine Schälfestigkeit gegenüber einer Polyamidtrennbeschichtung von < 0,1 N/25 mm auf.

## Patentansprüche

1. Verwendung einer Polymerdispersion zum Kaltsiegeln, wobei die Polymerdispersion mindestens ein in Wasser dispergiertes Polymer enthält, welches herstellbar ist durch Emulsionspolymerisation von radikalisch polymerisierbaren Monomeren in Gegenwart mindestens eines polymeren Schutzkolloids
und wobei das Polymer eine berechnete Glasübergangstemperatur im Bereich von -20 bis +10 °C aufweist
und wobei das Polymer zu 0,05 bis kleiner 1 Gew.%, vorzugsweise zu 0,07 bis 0,8 Gew.% gebildet ist aus mindestens einem Monomeren M ausgewählt aus der Gruppe bestehend aus (Meth)acrylatmonomeren mit einem Substituenten der Formel

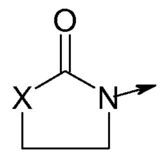

wobei X für $CH_2$, O, NH oder NR steht und R für eine C1 bis C4-Alkylgruppe steht.

2. Verwendung nach dem vorhergehenden Anspruch, **dadurch gekennzeichnet, dass** das Polymer zu mindestens 60 Gew.-% aus Hauptmonomeren aufgebaut ist, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren.

3. Verwendung nach einem der vorhergehenden Ansprüche, **dadurch gekennzeichnet, dass** das Polymer zu mindestens 60 Gew.% aus mindestens einem $C_1$ bis $C_{20}$ Alkyl(meth)-acrylat, deren Gemisch oder deren Gemisch mit Styrol und/oder Vinylacetat aufgebaut ist.

4. Verwendung nach einem der vorhergehenden Ansprüche, **dadurch gekennzeichnet, dass** das Polymer aufgebaut ist aus

   (a) 90 bis 99 Gew.% mindestens eines ersten Monomers, ausgewählt aus n-Butylacrylat und Ethylacrylat,
   (b) 0,1 bis 9,9 Gew.% mindestens eines zweiten Monomers, ausgewählt aus Methylacrylat, Methylmethacrylat, Vinylacetat und Styrol,
   (c) 0,05 bis 0,95 Gew.% Ureido(meth)acrylat.

5. Verwendung nach einem der vorhergehenden Ansprüche, **dadurch gekennzeichnet, dass** das Polymer frei von Säuregruppen ist.

6. Verwendung nach einem der vorhergehenden Ansprüche, **dadurch gekennzeichnet, dass** das Monomer M Ureidoethylmethacrylat ist.

7. Verwendung nach einem der vorhergehenden Ansprüche zum Kaltsiegeln einer Verpackung, wobei die kaltgesiegelte Verpackung eine anfängliche Öffnungskraft von mindestens 2 N/15 mm aufweist.

8. Verwendung nach einem der vorhergehenden Ansprüche, **dadurch gekennzeichnet, dass** das Schutzkolloid

   (i) in einer Menge von 7 bis 30 Gew.-Teile, bezogen auf 100 Gew.-Teile der zu polymerisierenden Monomeren, eingesetzt wird,
   (ii) zu mindestens 40 Gew.-% aus Hauptmonomeren aufgebaut ist, welche ausgewählt sind aus der Gruppe bestehend aus C1- bis C20-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen und Mischungen dieser Monomeren,
   (iii) zu mindestens 15 Gew.% aus ethylenisch ungesättigten Säuremonomeren aufgebaut ist, welche vorzugsweise ausgewählt sind aus Acrylsäure, Methacrylsäure und deren Gemisch und
   (iv) ein zahlenmittleres Molekulargewicht von 1000 bis 10000 aufweist.

**9.** Verwendung nach einem der vorhergehenden Ansprüche, **dadurch gekennzeichnet, dass** das Schutzkolloid zu 50 bis 80 Gew.% aufgebaut ist aus C2- bis C10-Alkyl(meth)acrylaten und zu 20 bis 50 Gew.% aus (Meth)acrylsäure.

**10.** Verwendung nach einem der vorhergehenden Ansprüche, **dadurch gekennzeichnet, dass** das Polymer hergestellt ist unter Verwendung von mindestens einem Molekulargewichtsregler, vorzugsweise in einer Menge von 0,05 bis 0,5 Gew.-Teile bezogen auf 100 Gew.-Teile der zu polymerisierenden Monomeren.

**11.** Verwendung nach einem der vorhergehenden Ansprüche, **dadurch gekennzeichnet, dass** das Polymer zu 100% aus Monomeren gebildet ist, welche ausgewählt sind aus Acrylsäureestern, Methacrylsäureestern, Vinylestern, Styrol, Ureido(meth)acrylat und deren Gemisch, und das Schutzkolloid

(i) in einer Menge von 7 bis 30 Gew.-%, bezogen auf die Menge des Polymers, eingesetzt wird,
(ii) zu mindestens 40 Gew.-% aus Hauptmonomeren aufgebaut ist, welche ausgewählt sind aus der Gruppe bestehend aus C1- bis C20-Alkyl(meth)acrylaten, Styrol, alpha-Methylstyrol und deren Gemisch,
(iii) zu mindestens 15 Gew.% aus ethylenisch ungesättigten Säuremonomeren aufgebaut ist, welche vorzugsweise ausgewählt sind aus Acrylsäure, Methacrylsäure und deren Gemisch und
(iv) ein zahlenmittleres Molekulargewicht von 1000 bis 10000 aufweist.

**12.** Verwendung nach einem der vorhergehenden Ansprüche, **dadurch gekennzeichnet, dass** die Autoadhäsionshaftung der Klebstoffschicht nach Kaltsiegelung mit 1,4 bar bei 20°C mindestens 2 N/15 mm beträgt und die Haftung der nichtgesiegelten Klebstoffschicht gegenüber einer Polyamidoberfläche nach Belastung einer kreisförmigen Oberfläche mit Durchmesser von 10 cm mit 10 Tonnen für einen Tag bei 20°C höchstens 0,1 N/25 mm beträgt.

**13.** Verwendung nach einem der vorhergehenden Ansprüche, **dadurch gekennzeichnet, dass** die Emulsionspolymerisation in Gegenwart des Schutzkolloids ohne Zusatz eines nicht-polymeren Emulgators erfolgt.

**14.** Verwendung nach einem der vorhergehenden Ansprüche, **dadurch gekennzeichnet, dass** die Emulsionspolymerisation in einer Rampenfahrweise erfolgt.

**15.** Verwendung nach einem der vorhergehenden Ansprüche zum Kaltsiegeln von Verpackungen, vorzugsweise von Folienverpackungen für Lebensmittel.

**16.** Verwendung nach einem der vorhergehenden Ansprüche, **dadurch gekennzeichnet, dass** die Polymerdispersion nach Aufbringen auf ein Substrat und nach Trocknen eine bei Raumtemperatur blockfeste, autoadhäsive Beschichtung bildet.

**17.** Verwendung nach dem vorhergehenden Anspruch, **dadurch gekennzeichnet, dass** es sich bei dem Substrat um eine Polymerfolie handelt.

**18.** Verfahren zur Herstellung einer kaltgesiegelten Verpackung, wobei eine Zusammensetzung in Form einer wässrigen Polymerdispersion zur Verfügung gestellt und auf ein Verpackungssubstrat aufgebracht, getrocknet und kaltgesiegelt wird und wobei die Polymerdispersion mindestens ein in Wasser dispergiertes Polymer enthält, welches herstellbar ist durch Emulsionspolymerisation von radikalisch polymerisierbaren Monomeren in Gegenwart mindestens eines polymeren Schutzkolloids
und wobei das Polymer eine berechnete Glasübergangstemperatur im Bereich von -20 bis +10 °C aufweist
und wobei das Polymer zu 0,05 bis 1 Gew.% gebildet ist aus mindestens einem Monomeren ausgewählt aus der Gruppe bestehend aus (Meth)acrylatmonomeren mit einem Substituenten der Formel

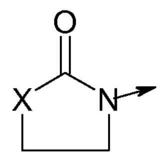

wobei X für $CH_2$, O, NH oder NR steht und R für eine C1 bis C4-Alkylgruppe steht.

**19.** Verfahren nach dem vorhergehenden Anspruch, **dadurch gekennzeichnet, dass** das Verpackungssubstrat ausgewählt ist aus Polymerträgerfolien aus Polyethylen und orientiertem Polypropylen.

20. Verfahren nach einem der beiden vorhergehenden Ansprüche , **dadurch gekennzeichnet, dass** die Polymerträgerfolie aus Polyethylen oder orientiertem Polypropylen besteht, auf einer Seite mit der Zusammensetzung in Form einer wässrigen Polymerdispersion beschichtet ist und auf der anderen Seite mit einer Releasebeschichtung, vorzugsweise auf Basis von Polyamid, beschichtet ist.

21. Verfahren nach einem der vorhergehenden Verfahrensansprüche, **dadurch gekennzeichnet, dass** das Kaltsiegeln bei Temperaturen unterhalb von 40 °C und unter Anwendung von Druck erfolgt.

22. Verfahren nach einem der vorhergehenden Verfahrensansprüche, **dadurch gekennzeichnet, dass** die Polymerdispersion in einer Menge von 2 bis 5 $g/m^2$, bezogen auf den Feststoffgehalt der Polymerdispersion, auf jedem zu siegelnden Materialabschnitt aufgebracht ist.

23. Verpackung, hergestellt nach dem Verfahren gemäß einem der vorhergehenden Verfahrensansprüche.

## Claims

1. The use of a polymer dispersion for cold sealing, the polymer dispersion comprising at least one polymer which is present in dispersion in water and is preparable by emulsion polymerization of radically polymerizable monomers in the presence of at least one polymeric protective colloid,
the polymer having a calculated glass transition temperature in the range from -20 to +10°C and the polymer being formed to an extent of 0.05 to less than 1 wt%, preferably 0.07 to 0.8 wt%, of at least one monomer M selected from the group consisting of (meth)acrylate monomers having a substituent of the formula

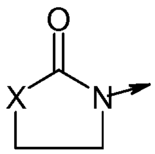

where X is $CH_2$, 0, NH or NR, and R is a C1 to C4 alkyl group.

2. The use according to the preceding claim, wherein the polymer is constructed to an extent of at least 60 wt% of principal monomers selected from the group consisting of C1 to C20 alkyl (meth)acrylates, vinyl esters of carboxylic acids containing up to 20 C atoms, vinylaromatics having up to 20 C atoms, ethylenically unsaturated nitriles, vinyl halides, vinyl ethers of alcohols containing 1 to 10 C atoms, aliphatic hydrocarbons having 2 to 8 C atoms and one or two double bonds, and mixtures of these monomers.

3. The use according to either of the preceding claims, wherein the polymer is composed to an extent of at least 60 wt% of at least one $C_1$ to $C_{20}$ alkyl (meth)acrylate, a mixture thereof, or a mixture thereof with styrene and/or vinyl acetate.

4. The use according to any of the preceding claims, wherein the polymer is composed of

   (a) 90 to 99 wt% of at least one first monomer selected from n-butyl acrylate and ethyl acrylate,
   (b) 0.1 to 9.9 wt% of at least one second monomer selected from methyl acrylate, methyl methacrylate, vinyl acetate, and styrene,
   (c) 0.05 to 0.95 wt% of ureido (meth)acrylate.

5. The use according to any of the preceding claims, wherein the polymer is free from acid groups.

6. The use according to any of the preceding claims, wherein the monomer M is ureidoethyl methacrylate.

7. The use according to any of the preceding claims for cold sealing of packaging, the cold-seal packaging having an initial opening force of at least 2 N/15 mm.

8. The use according to any of the preceding claims, wherein the protective colloid

(i) is used in an amount of 7 to 30 parts by weight, based on 100 parts by weight of the monomers to be polymerized,
(ii) is composed to an extent of at least 40 wt% of principal monomers selected from the group consisting of C1 to C20 alkyl (meth)acrylates, vinyl esters of carboxylic acids containing up to 20 C atoms, vinylaromatic having up to 20 C atoms, ethylenically unsaturated nitriles, vinyl halides, vinyl ethers of alcohols containing 1 to 10 C atoms, aliphatic hydrocarbons having 2 to 8 C atoms and one or two double bonds, and mixtures of these monomers,
(iii) is composed to an extent of at least 15 wt% of ethylenically unsaturated acid monomers preferably selected from acrylic acid, methacrylic acid, and a mixture thereof, and
(iv) has a number-average molecular weight of 1000 to 10 000.

**9.** The use according to any of the preceding claims, wherein the protective colloid is composed to an extent of 50 to 80 wt% of C2 to C10 alkyl (meth)acrylates and to an extent of 20 to 50 wt% of (meth)acrylic acid.

**10.** The use according to any of the preceding claims, wherein the polymer is prepared using at least one chain transfer agent, preferably in an amount of 0.05 to 0.5 part by weight, based on 100 parts by weight of the monomers to be polymerized.

**11.** The use according to any of the preceding claims, wherein the polymer is formed to an extent of 100% from monomers selected from acrylic esters, methacrylic esters, vinyl esters, styrene, ureido (meth)acrylate, and a mixture thereof, and the protective colloid

(i) is used in an amount of 7 to 30 wt%, based on the amount of the polymer,
(ii) is composed to an extent of at least 40 wt% of principal monomers selected from the group consisting of C1 to C20 alkyl (meth)acrylates, styrene, alphamethylstyrene, and a mixture thereof,
(iii) is composed to an extent of at least 15 wt% of ethylenically unsaturated acid monomers which are preferably selected from acrylic acid, methacrylic acid, and a mixture thereof, and
(iv) has a number-average molecular weight of 1000 to 10 000.

**12.** The use according to any of the preceding claims, wherein the autoadhesion of the layer of adhesive after cold sealing at 1.4 bar and 20°C is at least 2 N/15 mm and the adhesion of the unsealed layer of adhesive with respect to a polyamide surface after loading of a circular surface with a diameter of 10 cm with 10 tonnes for one day at 20°C is not more than 0.1 N/25 mm.

**13.** The use according to any of the preceding claims, wherein the emulsion polymerization takes place in the presence of the protective colloid without addition of a nonpolymeric emulsifier.

**14.** The use according to any of the preceding claims, wherein the emulsion polymerization takes place in a ramp regime.

**15.** The use according to any of the preceding claims for cold sealing of packaging, preferably of film packaging for food.

**16.** The use according to any of the preceding claims, wherein the polymer dispersion, following application to a substrate and following drying, forms a coating which at room temperature is blocking-resistant and is autoadhesive.

**17.** The use according to the preceding claim, wherein the substrate is a polymer film.

**18.** A method for producing cold-sealed packaging, in which a composition in the form of an aqueous polymer dispersion is made available and is applied to a packaging substrate, dried, and cold-sealed, the polymer dispersion comprising at least one polymer which is present in dispersion in water and is preparable by emulsion polymerization of radically polymerizable monomers in the presence of at least one polymeric protective colloid,
the polymer having a calculated glass transition temperature in the range from -20 to +10°C and the polymer being formed to an extent of 0.05 to 1 wt% of at least one monomer selected from the group consisting of (meth)acrylate monomers having a substituent of the formula

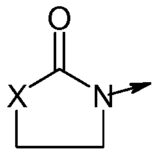

where X is $CH_2$, 0, NH or NR, and R is a C1 to C4 alkyl group.

19. The method according to the preceding claim, wherein the packaging substrate is selected from polymer carrier films comprising polyethylene and oriented polypropylene.

20. The method according to either of the two preceding claims, wherein the polymer carrier film consists of polyethylene or of oriented polypropylene, and is coated on one side with the composition in the form of an aqueous polymer dispersion, and on the other side with a release coating preferably based on polyamide.

21. The method according to any of the preceding method claims, wherein the cold sealing takes place at temperatures below 40°C and with application of pressure.

22. The method according to any of the preceding method claims, wherein the polymer dispersion is applied in an amount of 2 to 5 $g/m^2$, based on the solids content of the polymer dispersion, to each section of material that is to be sealed.

23. Packaging produced by the method according to any of the preceding method claims.

**Revendications**

1. Utilisation d'une dispersion polymère pour le scellage à froid, la dispersion polymère contenant au moins un polymère dispersé dans l'eau, qui peut être préparé par polymérisation en émulsion de monomères polymérisables par voie radicalaire en présence d'au moins un colloïde de protection polymère et le polymère présentant une température calculée de transition vitreuse dans la plage de -20 à +10°C et le polymère étant formé à raison de 0,05 à moins de 1% en poids, de préférence à raison de 0,07 à 0,8% en poids, d'au moins un monomère M choisi dans le groupe constitué par les monomères de type (méth)acrylate présentant un substituant de formule

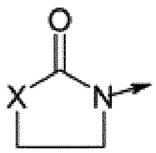

X représentant $CH_2$, 0, NH ou NR et R représentant un groupe alkyle en $C_1$ à $C_4$.

2. Utilisation selon la revendication précédente, **caractérisée en ce que** le polymère est constitué, à raison d'au moins 60% en poids, de monomères principaux, qui sont choisis dans le groupe constitué par les (méth)acrylates de $C_1$-$C_{20}$-alkyle, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons et les mélanges de ces monomères.

3. Utilisation selon l'une quelconque des revendications précédentes, **caractérisée en ce que** le polymère est constitué à raison d'au moins 60% en poids d'au moins un (méth) acrylate de $C_1$-$C_{20}$-alkyle, de son mélange ou de son mélange avec du styrène et/ou de l'acétate de vinyle.

4. Utilisation selon l'une quelconque des revendications précédentes, **caractérisée en ce que** le polymère est formé à partir de

(a) 90 à 99% en poids d'au moins un premier monomère, choisi parmi l'acrylate de n-butyle et l'acrylate d'éthyle,
(b) 0,1 à 9,9% en poids d'au moins un deuxième monomère, choisi parmi l'acrylate de méthyle, le méthacrylate

de méthyle, l'acétate de vinyle et le styrène,
(c) 0,05 à 0,95% en poids d'uréido(méth)acrylate.

5. Utilisation selon l'une quelconque des revendications précédentes, **caractérisée en ce que** le polymère est exempt de groupes acides.

6. Utilisation selon l'une quelconque des revendications précédentes, **caractérisée en ce que** le monomère M est le méthacrylate d'uréidoéthyle.

7. Utilisation selon l'une quelconque des revendications précédentes pour le scellage à froid d'un emballage, l'emballage scellé à froid présentant une force d'ouverture initiale d'au moins 2 N/15 mm.

8. Utilisation selon l'une quelconque des revendications précédentes, **caractérisée en ce que** le colloïde de protection

(i) est utilisé en une quantité de 7 à 30 parties en poids, par rapport à 100 parties en poids des monomères à polymériser,
(ii) est constitué, à raison d'au moins 40% en poids, de monomères principaux, qui sont choisis dans le groupe constitué par les (méth)acrylates de $C_1$-$C_{20}$-alkyle, les esters vinyliques d'acides carboxyliques contenant jusqu'à 20 atomes de carbone, les aromatiques de vinyle comprenant jusqu'à 20 atomes de carbone, les nitriles éthyléniquement insaturés, les halogénures de vinyle, les vinyléthers d'alcools contenant 1 à 10 atomes de carbone, les hydrocarbures aliphatiques comprenant 2 à 8 atomes de carbone et une ou deux doubles liaisons et les mélanges de ces monomères,
(iii) est constitué, à raison d'au moins 15% en poids, de monomères acides éthyléniquement insaturés, qui sont de préférence choisis parmi l'acide acrylique, l'acide méthacrylique et leur mélange et
(iv) présente un poids moléculaire numérique moyen de 1000 à 10.000 g/mole.

9. Utilisation selon l'une quelconque des revendications précédentes, **caractérisée en ce que** le colloïde de protection est constitué à raison de 50 à 80% en poids de (méth)acrylates de $C_2$-$C_{10}$-alkyle et à raison de 20 à 50% en poids d'acide (méth)acrylique.

10. Utilisation selon l'une quelconque des revendications précédentes, **caractérisée en ce que** le polymère est préparé avec utilisation d'au moins un agent de régulation du poids moléculaire, de préférence en une quantité de 0,05 à 0,5 partie en poids par rapport à 100 parties en poids des monomères à polymériser.

11. Utilisation selon l'une quelconque des revendications précédentes, **caractérisée en ce que** le polymère est formé à raison de 100% de monomères qui sont choisis parmi les esters de l'acide acrylique, les esters de l'acide méthacrylique, les esters de vinyle, le styrène, l'uréido(méth)acrylate et leur mélange et le colloïde de protection

(i) est utilisé en une quantité de 7 à 30% en poids, par rapport à la quantité du polymère,
(ii) est constitué, à raison d'au moins 40% en poids, de monomères principaux, qui sont choisis dans le groupe constitué par les (méth)acrylates de $C_1$-$C_{20}$-alkyle, le styrène, l'alpha-méthylstyrène et leur mélange,
(iii) est constitué, à raison d'au moins 15% en poids, de monomères acides éthyléniquement insaturés, qui sont de préférence choisis parmi l'acide acrylique, l'acide méthacrylique et leur mélange et
(iv) présente un poids moléculaire numérique moyen de 1000 à 10.000 g/mole.

12. Utilisation selon l'une quelconque des revendications précédentes, **caractérisée en ce que** l'autoadhésivité de la couche d'adhésif après le scellage à froid à 1,4 bar et à 20°C est d'au moins 2 N/15 mm et l'adhésivité de la couche d'adhésif non scellée par rapport à une surface de polyamide après sollicitation d'une surface circulaire d'un diamètre de 10 cm par 10 tonnes pendant un jour à 20°C est d'au plus 0,1 N/25 mm.

13. Utilisation selon l'une quelconque des revendications précédentes, **caractérisée en ce que** la polymérisation en émulsion a lieu en présence du colloïde de protection sans addition d'un émulsifiant non polymère.

14. Utilisation selon l'une quelconque des revendications précédentes, **caractérisée en ce que** la polymérisation en émulsion un lieu dans un mode opératoire à gradient.

15. Utilisation selon l'une quelconque des revendications précédentes pour le scellage à froid d'emballages, de préférence d'emballages de type feuille pour aliments.

**16.** Utilisation selon l'une quelconque des revendications précédentes, **caractérisée en ce que** la dispersion polymère, après l'application sur un substrat et après séchage, forme un revêtement autoadhésif et antiadhérent à température ambiante.

**17.** Utilisation selon la revendication précédente, **caractérisée en ce qu'**il s'agit, pour le substrat, d'une feuille polymère.

**18.** Procédé pour la fabrication d'un emballage scellé à froid, une composition sous forme d'une dispersion polymère aqueuse étant mise à disposition et appliquée sur un substrat d'emballage, séchée et scellée à froid et la dispersion polymère contenant au moins un polymère dispersé dans l'eau, qui peut être préparé par polymérisation en émulsion de monomères polymérisables par voie radicalaire en présence d'au moins un colloïde de protection polymère et le polymère présentant une température calculée de transition vitreuse dans la plage de -20 à +10°C et le polymère étant formé à raison de 0,05 à moins de 1% en poids d'au moins un monomère choisi dans le groupe constitué par les monomères de type (méth)acrylate présentant un substituant de formule

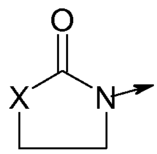

X représentant $CH_2$, 0, NH ou NR et R représentant un groupe alkyle en $C_1$ à $C_4$.

**19.** Procédé selon la revendication précédente, **caractérisé en ce que** le substrat d'emballage est choisi parmi les feuilles support polymères en polyéthylène et en polypropylène orienté.

**20.** Procédé selon l'une quelconque des deux revendications précédentes, **caractérisé en ce que** la feuille support polymère est en polyéthylène ou en polypropylène orienté, est revêtue sur une face par la composition sous forme d'une dispersion polymère aqueuse et sur l'autre face d'un revêtement antiadhésif, de préférence à base de polyamide.

**21.** Procédé selon l'une quelconque des revendications précédentes, **caractérisé en ce que** le scellage à froid a lieu à des températures inférieures à 40°C et avec utilisation de pression.

**22.** Procédé selon l'une quelconque des revendications précédentes, **caractérisé en ce que** la dispersion polymère est appliquée en une quantité de 2 à 5 g/$m^2$, par rapport à la teneur en solides de la dispersion polymère, sur chaque section de matériau à sceller.

**23.** Emballage, pouvant être obtenu par le procédé selon l'une quelconque des revendications de procédé précédentes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011073221 A2


### In der Beschreibung aufgeführte Nicht-Patentliteratur


- **W. MÄCHTLE.** *Makromolekulare Chemie,* 1984, vol. 185, 1025-1039
- Methoden der organischen Chemie. **HOUBEN-WEYL.** Makromolekulare Stoffe. Georg-Thieme-Verlag, 1961, vol. XIV/1, 411-420
- **T.G. FOX.** *Bull. Am. Phys. Soc.,* 1956, 123
- Ullmann's Encyclopädie der technischen Chemie. Verlag Chemie, 1980, vol. 19, 18
- Ullmann's Ecyclopedia of Industrial Chemistry. VCH Weinheim, 1992, vol. A21, 169
- **J. BRANDRUP ; E.H. IMMERGUT.** Polymer Handbook. J. Wiley, 1966
- POLYMER HANDBOOK. J. Wiley, 1975
- POLYMER HANDBOOK. J. Wiley, 1989
- Methoden der organischen Chemie. **HOUBEN-WEYL.** Makromolekulare Stoffe. Georg Thieme Verlag, 1961, vol. 14/1, 192-208